# EUROPÄISCHE PATENTSCHRIFT

(11) **EP 0 447 675 B1**
(45) Veröffentlichungstag und Bekanntmachung des Hinweises auf die Patenterteilung: **06.10.1993**
(21) Anmeldenummer: 90125386.4
(22) Anmeldetag: 22.12.1990
(51) Int. Cl.: F16F 9/02

(54) **Längenverstellbare Gasfeder**
Gas spring of adjustable length
Ressort à gaz à longueur réglable

(30) Priorität: 21.03.1990 DE 4009035
(43) Veröffentlichungstag der Anmeldung: 25.09.1991
(73) Patentinhaber: SUSPA COMPART Aktiengesellschaft, D-90518 Altdorf (DE)
(72) Erfinder: Bauer, Hans Jürgen, W-8503 Altdorf (DE); Wolf, Herbert, W-8500 Nürnberg (DE); Bauer, Hans-Peter, W-8503 Altdorf (DE)
(74) Vertreter: Rau, Manfred, Dr. Dipl.-Ing.

(56) Entgegenhaltungen:
- EP-A- 0 217 013
- EP-A- 0 219 362
- FR-A- 1 334 374
- FR-A- 1 344 990
- GB-A- 1 217 263
- US-A- 2 485 504

## Beschreibung

Die Erfindung betrifft eine längenverstellbare Gasfeder nach dem Oberbegriff des Anspruches 1.

Derartige längenverstellbare Gasfedern sind beispielsweise aus der JP-U-51-153 392 und der EP-B1-0 219 362 bekannt. Zwischen den beiden zylindrischen Abschnitten des Ventilstiftes ist hierbei ein konischer bzw. kegelstumpfförmiger Übergangsabschnitt ausgebildet. Zum Betätigen des Ventils wird der Ventilstift so weit in Richtung zum benachbarten Gehäuseraum in den Ventilkörper eingeschoben, bis die dem Gehäuseraum benachbarte Ringdichtung von dem zylindrischen Abschnitt größeren Durchmessers vollständig abhebt, so daß eine Durchström-Verbindung vom Ventilkörper-Innenraum zum benachbarten Gehäuseraum erreicht wird. Der Nachteil dieser Lösung liegt darin, daß die dem Gehäuseraum benachbarte Ringdichtung beim Schließen des Ventils, wenn der zylindrische Abschnitt größeren Durchmessers des Ventilstiftes unter Aufweitung der Ringdichtung durch diese hindurchgezogen wird, stark gewalkt und geschert wird, wodurch die Gefahr besteht, daß die Ringdichtung beschädigt wird, was zu einem Unbrauchbarwerden der Gasfeder führen kann. Vergleichbare Probleme treten auf, wenn die nach außen abdichtende Ringdichtung durch sehr tiefes Hineinschieben des Ventilstiftes in den Ventilkörper zum Einfüllen von Druckgas in die Gasfeder überbrückt wird.

Der Erfindung liegt daher die Aufgabe zugrunde, eine Gasfeder der gattungsgemäßen Art so auszugestalten, daß Beschädigungen der zum Abdichten zwischen Ventilkörper-Innenraum und benachbartem Gehäuseraum dienenden Ringdichtung vermieden werden.

Diese Aufgabe wird erfindungsgemäß durch die Merkmale im Kennzeichnungsteil des Anspruches 1 gelöst. Durch die erfindungsgemäßen Maßnahmen wird erreicht, daß auch beim Verschieben des Ventilstiftes zum Betätigen bzw. Längenverstellen der Gasfeder die Ringdichtung immer auf dem zylindrischen Abschnitt größeren Durchmessers des Ventilstiftes aufliegt, so daß bei einem Schließen des Ventils kein Walken bzw. Scheren der Ringdichtung auftritt.

Gemäß Anspruch 2 sind im Prinzip die gleichen Maßnahmen und die gleiche Ausgestaltung vorgesehen, um eine entsprechende Beschädigung der nach außen abdichtenden Ringdichtung beim Füllen der Gasfeder mit Druckgas zu vermeiden.

Die erfindungsgemäßen Maßnahmen ermöglichen die Weiterbildung nach Anspruch 3. Durch die weitere Ausgestaltung nach Anspruch 4 wird erreicht, daß auch am Übergang zwischen Nut und Ringdichtung keine nennenswerten mechanischen Beanspruchungen der Ringdichtung auftreten, wobei diese auf jeden Fall auch deshalb geringer sind, weil die wesentlichen Bereiche der Ränder der Nut sich etwa in Verschieberichtung erstrecken.

Durch die Weiterbildung nach den Ansprüchen 5 und 6 wird sichergestellt, daß die Ringdichtung über einen ausreichend großen Bereich an der zylindrischen Außenfläche des jeweiligen zylindrischen Außenfläche des jeweiligen zylindrischen Abschnitts anliegt, wobei die Bedeutung dieser Maßnahmen für die Nuten im zylindrischen Abschnitt größeren Durchmessers größer ist als hinsichtlich der Nuten im zylindrischen Abschnitt kleineren Durchmessers. Dies liegt darin, daß eine Gasfeder in der Regel nur einmal mit Druckgas gefüllt wird, daß sie aber im Laufe ihres Einsatzes sehr oft in der Länge verstellt wird.

Weitere Vorteile und Merkmale der Erfindung ergeben sich aus der nachfolgenden Beschreibung eines Ausführungsbeispiels anhand der Zeichnung. Es zeigt
- Fig. 1: einen Längsschnitt durch eine längenverstellbare Gasfeder nach der Erfindung,
- Fig. 2: das Ventil der erfindungsgemäßen Gasfeder nach Fig. 1 in vergrößertem Maßstab im Längsschnitt und
- Fig. 3: eine Draufsicht auf den Ventilstift des Ventils der Gasfeder.

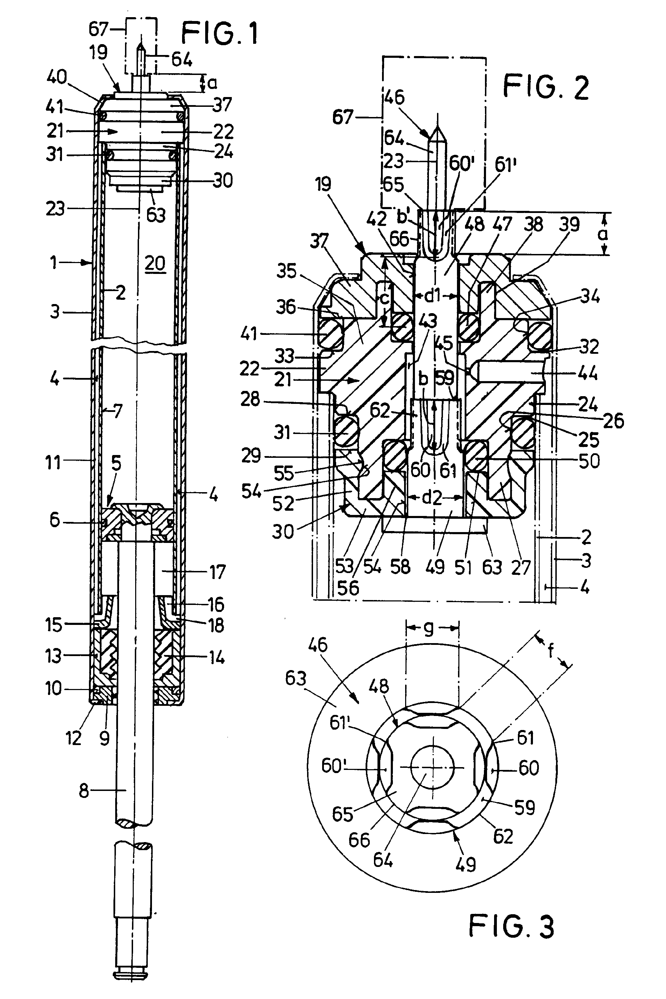

Die in Fig. 1 dargestellte längenverstellbare Gasfeder weist ein Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Aussenzylinder 3 und dem Innenzylinder 2 ist aufgrund des unterschiedlichen Durchmessers von Innenzylinder 2 und Außenzylinder 3 ein Ringraum 4 gebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial zum Gehäuse 1 geführten Kolbenstange 8 befestigt. Diese Kolbenstange 8 ist aus einem Ende des Gehäuses 1 herausgeführt. An diesem Ende ist das Gehäuse 1 durch eine Abschlußscheibe 9 verschlossen, die an ihrem Aussenumfang mittels einer Ringdichtung 10 gegenüber der Innenwand 11 des Außenzylinders 3 gasdicht abgedichtet ist. Die Abschlußscheibe 9 ist durch eine Umbördelung 12 des Außenzylinders 3 axial nach außen gehalten. Auf der Innenseite liegt gegen die Abschlußscheibe 9 eine topfförmige Hülse 13 an, die eine Mehrfach-Lippen-Dichtung 14 aufnimmt, die mit ihren Lippen dichtend gegen die Kolbenstange 8 anliegt. Dadurch wird ein Gasaustritt entlang der Oberfläche der Kolbenstange 8 nach außen unterbunden.

Gegen die Hülse 13 stützt sich vom Innenraum des Gehäuses 1 her ein an der Innenwand 11 des Außenzylinders 3 anliegendes Zentrierstück 15 ab, das mit Rippen 16 versehen ist, auf denen der Innenzylinder 2 mit seiner Innenwand 7 radial abgestützt, also zentriert ist. Auf diesen Rippen 16 ist der Innenzylinder 2 auch axial fest abgestützt, also axial einseitig festgelegt. Dadurch daß nur Rippen 16 zur Zentrierung und axialen Abstützung des Innenzylinders 2 vorgesehen sind, ist in diesem Bereich der Ringraum 4 mit dem Gehäuseraum 17 im Innenzylinder 2 verbunden, der zwischen dem Kolben 5, dem kolbenstangenaustrittsseitigen Ende des Gehäuses 1 und der Innenwand 7 des Innenzylinders 2 begrenzt wird. Zwischen den Rippen 16 sind also Überströmkanäle 18 zwischen dem Gehäuseraum 17 und dem Ringraum 4 gebildet.

An dem dem Kolbenstangenaustritt entgegengesetzten Ende des Gehäuses 1 ist ein Ventil 19 angeordnet, mittels dessen der im Innenzylinder 2 zwischen dem Kolben 5 und dem Ventil 19 befindliche Gehäuseraum 20 mit dem Ringraum 4 und damit dem anderen Gehäuseraum 17 verbunden bzw. von diesem getrennt werden kann.

Das Ventil 19 weist einen Ventilkörper 21 auf, der in seinem axial mittleren Bereich mit einem Ringbund 22 versehen ist, der an der Innenwand 11 des Außenzylinders 3 anliegt, wodurch der Ventilkörper 21 im Außenzylinder 3 zentriert wird. Dieser Ringbund 22 ist der Abschnitt größten Durchmessers am gesamten Ventilkörper 21. Wenn in der Beschreibung von "axial" gesprochen wird, dann bezieht sich dies immer auf die Mittel-Längs-Achse 23 der Gasfeder, die gleichzeitig auch Symmetrieachse aller Einzelteile und Baugruppen ist.

Zum Gehäuseraum 20 hin schließt sich an den Ringbund 22 ein Zentrierbund 24 geringeren Durchmessers an, der an der Innenwand 7 des Innenzylinders 2 anliegt, wodurch letzterer relativ zum Außenzylinder 3 zentriert wird. Gleichzeitig liegt der Innenzylinder 2 mit seinem zugeordneten Rand gegen die zugewandte Seitenfläche des Ringbundes 22 an, wodurch er axial gehalten wird.

An den Zentrierbund 24 schließt sich wiederum in Richtung auf den Gehäuseraum 20 eine Außennut 25 an, deren Boden 26 durch einen hülsenförmigen Abschnitt 27 des Ventilkörpers 21 gebildet wird, dessen Außendurchmesser wiederum geringer ist als der Außendurchmesser des Zentrierbundes 24. Eine dem Ringbund 22 zugewandte Seitenwand 28 der Außennut 25 wird durch die entsprechende Seitenfläche des Zentrierbundes 24 am Übergang von diesem zum Abschnitt 27 gebildet. Die andere, dem Gehäuseraum 20 zugewandte Seitenwand 29 der Außennut 25 wird durch einen Deckel 30 gebildet. In der Außennut 25 befindet sich eine Außen-Ringdichtung 31, die dichtend gegen die Innenwand 7 des Innenzylinders 2 anliegt, so daß dort ein Gasdurchtritt im Kurzschluß vom Gehäuseraum 20 zum Ringraum 4 und damit dem anderen Gehäuseraum 17 ausgeschlossen ist.

Axial gesehen zur Außenseite des Gehäuses 1 hin schließt sich an den Ringbund 22 eine Außennut 32 an, deren eine, der anderen Außennut 25 zugewandte Seitenwand 33 durch die entsprechende Seitenfläche des Ringbundes 22 gebildet ist. Ihr Boden 34 wird durch einen Ringabschnitt 35 gebildet, der sich an den Ringbund 22 anschließt, und dessen Außendurchmesser geringer ist als derjenige des Ringbundes 22. Die zur Außenseite des Gehäuses 1 hin gelegene Seitenwand 36 der Außennut 32 wird durch eine Ringscheibe 37 gebildet. Diese Ringscheibe 37 ist auf einem ringzylindrischen Führungsabschnitt 38 des Ventilkörpers 21 angeordnet, dessen Außendurchmesser wiederum geringer ist als der des Ringabschnitts 35. Die Ringscheibe 37 ist auf der zylindrischen Außenfläche 39 des Führungsabschnitts 38 mit Preßsitz festgelegt. Wie aus Fig. 1 hervorgeht, ist der äußere Rand des Außenzylinders 3 mit einer Umbördelung 40 um die Außenseite der Ringscheibe 37 herumgedrückt, wodurch das ganze Ventil 19 nach außen gehalten und gleichzeitig axial nach innen gegen den Innenzylinder 2 gepreßt wird.

Der aus dem Führungsabschnitt 38, dem Ringabschnitt 35, dem Ringbund 22, dem Zentrierbund 24 und dem hülsenförmigen Abschnitt 27 bestehende Ventilkörper 21 ist einstückig aus Kunststoff geformt und - wie sich aus der vorhergehenden Beschreibung ergibt - symmetrisch zur Mittel-Längs-Achse 23 aufgebaut, so daß er mit einer Form gespritzt werden kann, die nur in einer quer zur Achse 23 liegenden Ebene getrennt ist, die wiederum im Bereich des Ringbundes 22 angeordnet ist. Von hier aus verjüngt sich der Ventilkörper 21 axial jeweils zu seinen Enden hin, und zwar stufenweise. Die Ringscheibe 37 besteht aus Metall. In der Außennut 32 ist eine Außen-Ringdichtung 41 angeordnet, die gegen die Innenwand 11 des Außenzylinders 3 anliegt und damit einen Gasaustritt in diesem Bereich nach außen unterbindet.

Die Ringscheibe 37 und der benachbarte Bereich des Ventilkörpers 21 sind mit einer zylindrischen koaxialen Führungsbohrung 42 versehen, an die sich ein ebenfalls zylindrischer Ventilkörper-Innenraum 43 anschließt. Dieser Innenraum 43 hat einen größeren Durchmesser als die Führungsbohrung 42. Die Herstellung des Ventilkörpers 21 stellt auch bezüglich des inneren Bereichs keine Probleme dar, da für den Innenraum 43 und die sich anschließende Führungsbohrung 42 ein Kern verwendet werden kann.

In diesen Innenraum 43 mündet ein den Ringbund 22 radial durchsetzender Überströmkanal 44 ein, der an seiner Außenseite in den Ringraum 4 einmündet. Am Austritt in den Innenraum 43 ist der Überströmkanal 44 mit einer Drosselöffnung 45 versehen.

Im Ventilkörper 21 ist ein Ventilstift 46 angeordnet, der nach außen aus der Ringscheibe 37 und damit aus der Gasfeder herausragt. Dieser im wesentlichen abgestuft-zylindrische Ventilstift 46 ist in der Führungsbohrung 42 geführt. Am Übergang von der Führungsbohrung 42 zum Innenraum 43 ist eine Innen-Ringdichtung 47 angeordnet, die axial nach außen durch die Ringscheibe 37 festgelegt ist und die radial einerseits an einem zylindrischen Abschnitt 48 des Ventilstiftes 46 und andererseits an der Innenwand des Führungsabschnitts 38 anliegt, so daß ein Gasaustritt durch die Führungsbohrung 42 ausgeschlossen ist. Die Innen-Ringdichtung 47 ist axial in Richtung auf den Gehäuseraum 20 durch den Übergang am Ventilkörper 21 zur Führungsbohrung 42 festgelegt.

An dem dem Gehäuseraum 20 zugewandten Ende des Innenraums 43 liegt gegen eine Übergangsfläche vom Innenraum 43 zum Abschnitt 24 ebenfalls eine Innen-Ringdichtung 50, an, die weiterhin radial gegen den Abschnitt 27 und gegen einen weiteren zylindrischen Abschnitt 49 des Ventilstifts 46 anliegt. Axial zum Gehäuseraum 20 liegt sie gegen eine entsprechende Anlagefläche 51 des Deckels 30 an.

Der Deckel 30 ist topfförmig ausgebildet, d. h. er weist einen äußeren sich axial zur Außenseite der Gasfeder hin erstreckenden Ringsteg 52 auf, an dem die Seitenwand 29 der Außennut 25 ausgebildet ist. Er weist weiterhin einen ringscheibenförmigen Abschnitt 53 auf. Der Ringsteg 52 ist durch eine in eine Nut 54 im hülsenförmigen Abschnitt 27 eingedrückte Sicke 55 am Abschitt 27 befestigt, wodurch der Deckel 30 am Ventilkörper 21 festgelegt ist. Da auch der Deckel 30 aus Kunststoff besteht, ist dies leicht realisierbar.

Radial innen erstreckt sich von dem ringscheibenförmigen Abschnitt 53 ein Ringzylindersteg 56 axial nach außen, gegen den die Innen-Ringdichtung 50 anliegt.

Der Deckel 30 weist eine koaxiale Bohrung 57 auf, deren Durchmesser etwas größer ist als der Durchmesser des Abschnittes 49 des Ventilstiftes 46 in diesem Bereich, so daß hier ein ringförmiger Durchlaßkanal 58 gebildet wird.

Der zylindrische Abschnitt 49 des Ventilstifts 46 hat einen etwas größeren Durchmesser d2 als der zylindrische Abschnitt 48 des Ventilstiftes 46, so daß der Übergang vom Abschnitt 48 zum Abschnitt 49 durch einen Ringbund 59 gebildet wird. Ausgehend von diesem Ringbund 59 sind im zylindrischen Abschnitt 49 flache Nuten 60 ausgebildet, deren Ränder 61 am Übergang zur zylindrischen Außenfläche 62 des Abschnittes 49 ausgerundet, also kantenfrei ausgebildet sind, wie dies Figur 3 zu entnehmen ist. Die Nuten 60 erstrecken sich nur so weit vom Ringbund 59 in Richtung zum Gehäuseraum 20, d. h. ihre Länge b ist derart, daß sie in der dargestellten Ruhelage des Ventilstifts 46, die der Schließstellung des Ventils 19 entspricht, sich nicht mit der Innen-Ringdichtung 50 überlappen, diese also nicht überbrücken. Die Abstände der Ringdichtung 50 vom Ringbund in der in Figur 2 dargestellten Ruhelage des Ventilstiftes 46 ist also zumindest etwas größer als die Länge b der Nuten 60. In dieser Stellung des Ventilstiftes 46 liegt die Innen-Ringdichtung 50 also durchgehend nur an der zylindrischen Außenfläche 62 des Abschnitts 49 an, schließt also den Ventilkörper-Innenraum 43 gasdicht vom Gehäuseraum 20 ab. Der Ventilstift 46 weist an seinem im Gehäuseraum 20 gelegenen Ende einen Anschlagteller 63 auf, so daß er nicht durch den Gasdruck nach außen aus dem Gehäuse 1 herausgedrückt werden kann.

Wenn der Ventilstift 46 in Richtung auf den Gehäuseraum 20 in den Ventilkörper 21 eingedrückt wird, dann überbrücken die Nuten 60 die Innen-Ringdichtung 50, wobei die Innen-Ringdichtung 50 aber weiterhin an der zylindrischen Außenfläche 62 des zylindrischen Abschnitts 49 jeweils zwischen den Nuten anliegt. Die Innen-Ringdichtung 50 wird nur im Bereich der Nuten 60 überbrückt. Die abgerundeten Ränder 61 der Nuten verhindern, daß die Ringdichtung 50 in diesem Bereich mechanisch belastet wird. In dieser überbrückten Stellung der Innen-Ringdichtung 50 kann aus dem Gehäuseraum 20 Gas durch den Durchlaßkanal 58, den Innenraum 43, die Drosselöffnung 45, den Überströmkanal 44, den Ringraum 4 und die Überströmkanäle 18 in den Gehäuseraum 17 oder umgekehrt strömen. Wenn die Kolbenstange 8 bei geöffnetem Ventil 19 in das Gehäuse 1 hineingeschoben wird, dann strömt das im Gehäuse befindliche Druckgas in der geschilderten Weise; wenn bei geöffnetem Ventil 19 auf die Kolbenstange keine oder nur eine geringe Kraft ausgeübt wird, dann strömt das Druckgas in umgekehrter Richtung und schiebt den Kolben 5 mit der Kolbenstange 8 in umgekehrter Richtung, also aus dem Gehäuse 1 hinaus. Wenn der Ventilstift 46 losgelassen wird, wird die Überbrückung der Innen-Ringdichtung 50 durch die Nuten 60 aufgehoben und damit die Gasströmung unterbrochen. Der Kolben 5 mit der Kolbenstange 8 bleibt dann in einer entsprechenden Lage relativ zum Gehäuse stehen und kann gegen die vom Druckgas auf beiden Seiten ausgeübten Kräfte anfedern.

An seinem außerhalb der Ringscheibe 37 liegenden Seite, also außerhalb des Gehäuses 1, ist der Ventilstift 46 mit einem dünnen stiftartigen Ansatz einstückig ausgebildet, dessen Durchmesser deutlich geringer ist, als der Durchmesser d1 des benachbarten zylindrischen Abschnitts 48. Auch hier wird der Übergang von dem Ansatz 64 zum zylindrischen Abschnitt 48 durch einen Ringbund 65 gebildet. Ausgehend von diesem Ringbund 65 sind in der zylindrischen Außenfläche 66 des Abschnitts 48 Nuten 60' ausgebildet, die in gleicher Weise ausgebildet sind, wie die Nuten 60. Sie weisen also in gleicher Weise gut abgerundete Ränder 61' auf und eine Länge b', die deutlich kleiner ist als der Abstand c der Innen-Ringdichtung 47 von den Nuten 60' in der Ruhelage des Ventilstiftes 46. Diese Nuten 60' dienen dazu, die Gasfeder mit Druckgas zu füllen. Hierzu wird der Ventilstift 46 durch entsprechenden Angriff am stiftartigen Ansatz 64 so tief in den Ventilkörper 21 hineingeschoben, bis die Nuten 60' die axial außenliegende Innen-Ringdichtung 47 überbrückt, so daß durch die Führungsbohrung 42 und die Nuten 60' Druckgas in den Ventilkörper-Innenraum 43 gedrückt werden kann, von wo es durch den Überströmkanal 44 und den Ringraum 4 in den Gehäuseraum 17 und durch den Durchlaßkanal 58 in den Gehäuseraum 20 strömt. Hierbei ist der zylindrische Abschnitt 49 vollkommen von der Innen-Ringdichtung 50 abgehoben. Nach dem Füllen der Gasfeder mit Druckgas wird auf dem stiftartigen Ansatz 64 eine nur gestrichelt angedeutete Auslösekappe 67 befestigt, auf die zum Öffnen des Ventils eine entsprechende Öffnungskraft ausgeübt wird. Diese radial deutlich über den außenliegenden zylindrischen Abschnitt 48 geringeren Durchmessers hinausragende Auslösekappe 67 verhindert, daß bei der Betätigung des Ventilstifts 46 zum Längenverstellen der Gasfeder der Ventilstift 46 so tief eingeschoben wird, daß ein Abblasen des Druckgases über die Kanäle 60' stattfinden könnte. Die Auslösekappe 67 kommt in der weitest eingeschobenen Stellung des Ventilstiftes 46 auf der Außenseite der Ringscheibe 37 zur Anlage und definiert so einen maximalen Ventil-Betätigungsweg a des Ventilstiftes 46.

Der Ventilstift 46 ist - wie die vorstehende Schilderung und die Zeichnungen erkennen lassen - von dem Ansatz 64 zum Anschlagteller 63 ohne Einschnürung ausgebildet; er erweitert sich absatzweise in dieser Richtung. Er kann daher in sehr einfacher Weise durch Spritzen in einer Form hergestellt werden, deren Trennfläche in der Außenfläche des Anschlagtellers 63 liegt.

Wie insbesondere Figur 3 entnehmbar ist, weist der Abschnitt der zylindrischen Außenfläche 62 zwischen zwei benachbarten Nuten 60 eine Breite f auf, die mindestens gleich der Breite g einer Nut 60 ist. Die Breite g einer Nut 60 erstreckt sich also etwa über ein Achtel des Umfangs des zylindrischen Abschnitts 49, während sich der Abschnitt zwischen zwei benachbarten Nuten 60 über eine Breite g erstreckt, die mindestens etwa ein Achtel dieses Umfangs ist. Für die Nuten 60' im zylindrischen Abschnitt 48 gilt etwa entsprechendes.

Bei dem Ringraum 4 handelt es sich um einen Freiraum, d. h. es kann sich einerseits nur um einen reinen Überströmraum handeln, der zur Verbindung der beiden Gehäuseräume 17 und 20 dient. Andererseits kann er aber auch die Funktion eines Ausgleichsraumes haben, wenn er mit dem Gehäuseraum 17 nicht verbunden ist.

Der Ventilstift 46 kann aus einem Polyamid oder einem Acetalharz bestehen.

## Patentansprüche

1. Längenverstellbare Gasfeder, mit zwei einander konzentrisch umschließenden, zwischen sich einen Freiraum (4) begrenzenden und zumindest teilweise mit einem Druckgas gefüllten Zylindern (2, 3), mit einem in dem Innenzylinder (2) gleitend angeordneten Kolben (5), der mit einer zu einem Zylinderende hin abgedichtet nach außen herausgeführten Kolbenstange (8) verbunden ist, mit einem die Zylinder (2, 3) an dem dem Kolbenstangenaustritt entgegengesetzten Ende nach außen abschließenden Ventil (19) zur Verbindung des Freiraums (4) mit dem dem Ventil (19) benachbarten Gehäuseraum (20) im Innenzylinder (2), wobei das Ventil (19) einen Ventilkörper (21) aufweist, in dem ein von einem Ventilstift (46) axial durchsetzter, mit dem Freiraum (4) verbundener Ventilkörper-Innenraum (43) ausgebildet ist, der durch eine an der zylindrischen Außenfläche (66) eines zylindrischen Abschnitts (48) geringeren Durchmessers (d1) des Ventilstifts (46) anliegende Ringdichtung (47) nach außen abgedichtet ist und der durch eine im Abstand hierzu angeordnete, an der zylindrischen Außenfläche (62) eines zylindrischen Abschnitts (49) größeren Durchmessers (d2) des Ventilstifts (46) anliegende Ringdichtung (50) zum benachbarten Gehäuseraum (20) hin abgedichtet ist, wobei der Ventilkörper-Innenraum (43) durch Verschieben des in einer Ruhelage nach außen aus dem Ventilkörper (21) herausragenden Ventilstiftes aus dieser Ruhelage in Richtung zum benachbarten Gehäuseraum (20) um einen Ventil-Betätigungsweg mit einer maximalen Länge (a) mit dem Gehäuseraum (20) verbindbar ist, dadurch gekennzeichnet, daß in dem zylindrischen Abschnitt (49) größeren Durchmessers (d2) mindestens eine sich in Verschieberichtung erstreckende Nut (60) ausgebildet ist, die in der Ruhelage des Ventilstiftes (46) sich auf der vom benachbarten Gehäuseraum (20) abgewandten Seite der Ringdichtung (50) befindet und die beim Verschieben des Ventilstiftes (46) die Ringdichtung (50) überbrückt, und daß der zylindrische Abschnitt (49) größeren Durchmessers (d2) sich in der Ruhelage des Ventilstiftes (46) zum Ventilkörper-Innenraum (43) um eine Länge (e) erstreckt, die mindestens dem maximalen Ventil-Betätigungsweg (a) entspricht.

2. Gasfeder nach dem Oberbegriff des Anspruches 1 und insbesondere auch nach dem Kennzeichen des Anspruches 1, dadurch gekennzeichnet, daß in dem zylindrischen Abschnitt (48) kleineren Durchmessers (d1) mindestens eine sich in Verschieberichtung erstreckende Nut (60') ausgebildet ist, die in der Ruhelage des Ventilstiftes (46) um eine Strecke (c) von der nach außen abdichtenden Ringdichtung (47) entfernt ist, die größer als der maximale Ventil-Betätigungsweg (a) ist und die bei einer Verschiebung des Ventilstiftes (46) über den maximalen Ventil-Betätigungsweg (a) hinaus zum benachbarten Gehäuseraum (20) hin die nach außen abdichtende Ringdichtung (47) überbrückt und den Ventilkörper-Innenraum (43) nach außen verbindet.

3. Gasfeder nach Anspruch 1 oder 2, dadurch gekennzeichnet, daß die mindestens eine Nut (60, 60') in einem den zylindrischen Abschnitt (49, 48) abschliessenden Ringbund (59, 65) mündet.

4. Gasfeder nach Anspruch 1 oder 2, dadurch gekennzeichnet, daß die mindestens eine Nut (60, 60') mit abgerundeten Rändern (61, 61') in die zylindrische Außenfläche (62, 66) des zylindrischen Abschnitt (49, 48) übergeht.

5. Gasfeder mindestens nach Anspruch 1, dadurch gekennzeichnet, daß zwischen zwei an einem zylindrischen Abschnitt (49, 48) ausgebildeten Nuten (60, 60') ein Abschnitt der zylindrischen Außenfläche (62, 66) ausgebildet ist, dessen Breite(f)mindestens einem Achtel des Umfangs der zylindrischen Außenfläche (62, 66) entspricht.

6. Gasfeder mindestens nach Anspruch 1, dadurch gekennzeichnet, daß die mindestens eine Nut (60, 60') eine Breite (g) aufweist, die höchstens einem Achtel des Umfangs der zylindrischen Außenfläche (62, 66) entspricht.

7. Gasfeder nach Anspruch 2, dadurch gekennzeichnet, daß der zylindrische Abschnitt (48) kleineren Durchmessers (d1) mit einem sich nach außen erstreckenden, gegenüber dem zylindrischen Abschnitt (48) verjüngten, stiftartigen Ansatz (64) versehen ist.

8. Gasfeder nach Anspruch 1 oder 2, dadurch gekennzeichnet, daß der Ventilstift an seinem dem benachbarten Gehäuseraum (20) zugewandten Ende mit einem Anschlagteller (63) versehen ist.

9. Gasfeder nach Anspruch 1 oder 2, dadurch gekennzeichnet, daß der Ventilstift (46) einstückig aus Kunststoff besteht.

## Claims

1. A longitudinally adjustable gas spring with two cylinders (2, 3) enclosing each other concentrically, defining a free space (4) and being filled at least partially with a compressed gas, with a piston (5) arranged slidably in an inner cylinder (2) and connected with a piston rod (8) guided to exit in a sealed off manner at one end of the cylinders, with a valve (19) closing the cylinders (2, 3) outwards at the end opposite to where the piston rod exits to connect the free space (4) with the housing chamber (20) neighbouring the valve (19) in the inner cylinder (2), the valve (19) having a valve body (21), in which an inner chamber (43) of the valve body (21) is formed, which is axially passed through by a valve pin (46), which chamber is connected with the free space (4), and which is sealed off outwards by an annular seal (47) bearing against a cylindrical external surface (66) of a cylindrical section (48) of smaller diameter (d1) of the valve pin (46), and which is sealed off towards the adjacent housing chamber (20) by an annular seal (50) arranged at a distance from the annular seal (47) and bearing against a cylindrical external surface (62) of a cylindrical section (49) of greater diameter (d2) of the valve pin (46), the inner chamber (43) of the valve body (21) being connectable with the housing chamber (20) by displacement of the valve pin, which projects outwards over the valve body (21) in a position of rest, out of this position of rest in a direction towards the adjacent housing chamber (20) by a valve-actuation-path of a maximum length (a), characterized in that at least one groove (60) extending in the direction of displacement is formed in the cylindrical section (49) of greater diameter (d2), which groove (60) is located on the side of the annular seal (50) facing away from the adjacent housing chamber (20) in the position of rest of the valve pin (46), and which groove (60) bridges the annular seal (50) upon displacement of the valve pin (46), and in that, in the position of rest of the valve pin (46), the cylindrical section (49) of greater diameter (d2) extends towards the inner chamber (43) of the valve body (21) by a length (e) corresponding at least to the maximum valve-actuation-path (a).

2. A gas spring according to the preamble of claim 1 and in particular also according to the characterizing part of claim 1, characterized in that at least one groove (60') extending in the direction of displacement is formed in the cylindrical section (48) of smaller diameter (d1), which groove (60') is spaced apart from the annular seal (47) sealing off outwards by a path (c) dimensioned greater than the maximum valve-actuation-path (a) in the position of rest of the valve pin (46), and which groove (60') bridges the annular seal (47) sealing off outwards and connects the inner chamber (43) of the valve body (21) outwards, when the valve pin (46) is displaced beyond the maximum valve-actuation path (a).

3. A gas spring according to claim 1 or 2, characterized in that the at least one groove (60, 60') opens into an annular collar (59, 65), in which terminates the cylindrical section (49, 48).

4. A gas spring according to claims 1 or 2, characterized in that the at least one groove (60, 60') passes with rounded edges (61, 61') into the cylindrical external surface (62, 66) of the cylindrical section (49, 48).

5. A gas spring at least according to claim 1, characterized in that , between two grooves (60, 60') formed on a cylindrical section (49, 48), a section of the cylindrical external surface (62, 66) is formed, of which the width (f) corresponds to at least one eighth of the circumference of the cylindrical external surface (62, 66).

6. A gas spring at least according to claim 1, characterized in that the at least one groove (60, 60') has a width (g) corresponding to at maximum one eighth of the circumference of the cylindrical external surface (62, 66).

7. A gas spring according to claim 2, characterized in that the cylindrical section (48) of smaller diameter (d1) is provided with a pin-like tongue (64) extending outwards and tapered in relation to the cylindrical section (48).

8. A gas spring according to claim 1 or 2, characterized in that the valve pin is provided with a bearing disk (63) at its end facing the adjacent housing chamber (20).

9. A gas spring according to claim 1 or 2, characterized in that the valve pin (46) is integrally made of plastics material.

## Revendications

1. Ressort à gaz à longueur réglable comprenant deux cylindres (2, 3) qui sont emboîtés l'un dans l'autre de manière concentrique et délimitent entre eux une chambre libre (4), un piston (5) qui est logé de manière coulissante dans le cylindre intérieur (2) et relié à une tige de piston (8) qui est amenée vers l'extérieur en étant étanchée par rapport à l'une des extrémités du cylindre, une valve (19) qui obture les cylindres (2, 3) vers l'extérieur au niveau de l'extrémité opposée à la sortie de la tige de piston afin de relier la chambre libre (4) à la chambre de carter (20) voisine de la valve (19) et ménagée dans le cylindre intérieur (2), la valve (19) comportant un corps de valve (21) dans lequel est prévue une chambre intérieure (43) de corps de valve qui est traversée axialement par un pointeau de valve (46) et est reliée à la chambre libre (4), qui est étanchée vers l'extérieur par un joint annulaire (47) appliqué contre la surface extérieure cylindrique (66) d'une partie cylindrique (48) de plus petit diamètre (d1) du pointeau de valve (46) et qui est étanchée par rapport à la chambre de carter voisine (20) par un joint annulaire (50) disposé à distance du joint annulaire (47) et appliqué contre la surface extérieure cylindrique (62) d'une partie cylindrique (49) de plus grand diamètre (d2) du pointeau de valve (46), la chambre intérieure (43) du corps de valve pouvant être mise en communication avec la chambre de carter (20) en faisant coulisser le pointeau de valve, qui, en position de repos, sort du corps de valve (21) vers l'extérieur, à partir d'une position de repos en direction de la chambre de carter voisine (20) selon une course d'actionnement de valve d'une longueur maximum (a), caractérisé en ce qu'il est prévu, dans la partie cylindrique (49) de plus grand diamètre (d2), au moins une gorge (60) qui s'étend dans la direction de coulissement, qui, lorsque le pointeau de valve (46) est en position de repos, se trouve sur le côté du joint annulaire (50) opposé à la chambre de carter voisine (20) et qui, lors du coulissement du pointeau de valve (46), recouvre le joint annulaire (50), et en ce que, lorsque le pointeau de valve (46) se trouve en position de repos, la partie cylindrique (49) de plus grand diamètre (d2) s'étend, par rapport à la chambre intérieure (43) du corps de valve, sur une longueur (e) qui correspond au moins à la course maximum d'actionnement de valve (a).

2. Ressort à gaz selon le préambule de la revendication 1 et en particulier aussi selon la caractéristique de la revendication 1, caractérisé en ce qu'il est prévu, dans la partie cylindrique (48) de plus petit diamètre (d1), au moins une gorge (60') qui s'étend dans la direction de coulissement et qui, lorsque le pointeau de valve (46) est en position de repos, est éloignée d'une distance (c) par rapport au joint annulaire (47) assurant l'étanchéité vers l'extérieur, ladite distance (c) étant supérieure à la course maximum d'actionnement de valve (a), et ladite gorge (60') recouvrant le joint annulaire (47) assurant l'étanchéité vers l'extérieur lorsque le pointeau de valve (46) se déplace au-delà de la course maximum d'actionnement de valve (a) en direction de la chambre de carter voisine (20), et reliant la chambre intérieure (43) du corps de valve avec l'extérieur.

3. Ressort à gaz selon la revendication 1 ou 2, caractérisé en ce que la gorge (60, 60'), au nombre d'au moins une, débouche dans un collet annulaire (59, 65) qui ferme la partie cylindrique (49, 48).

4. Ressort à gaz selon la revendication 1 ou 2, caractérisé en ce que la gorge (60, 60'), au nombre d'au moins une, est prolongée, avec des bords arrondis (61, 61'), par la surface extérieure cylindrique (62, 66) de la partie cylindrique (49, 48).

5. Ressort à gaz selon au moins la revendication 1, caractérisé en ce qu'il est prévu, entre deux gorges (60, 60') pratiquées sur une partie cylindrique (49, 48), une partie de la surface extérieure cylindrique (62, 66) dont la largeur (f) correspond au moins à un huitième du périmètre de la surface extérieure cylindrique (62, 66).

6. Ressort à gaz selon au moins la revendication 1, caracterisé en ce que la gorge (60, 60'), au nombre d'au moins une, présente une largeur (g) correspondant au maximum à un huitième du périmètre de la surface extérieure cylindrique (62, 66).

7. Ressort à gaz selon la revendication 2, caractérisé en ce que la partie cylindrique (48) de plus petit diamètre (d1) est munie d'un embout (64) en forme de broche qui s'étend vers l'extérieur et qui est rétréci par rapport à la partie cylindrique (48).

8. Ressort à gaz selon la revendication 1 ou 2, caractérisé en ce que, à son extrémité tournée vers la chambre de carter voisine (20), le pointeau de valve est muni d'un plateau (63) formant butée.

9. Ressort à gaz selon la revendication 1 ou 2, caractérisé en ce que le pointeau de valve (46) est réalisé d'un seul tenant en matière plastique.
